# EUROPEAN PATENT APPLICATION

(11) **EP 4 563 874 A1**
(43) Date of publication of application: **04.06.2025**
(21) Application number: 24215750.1
(22) Date of filing: 27.11.2024
(51) Int. Cl.: F17C 5/06

(54) **REFUELING STATION AND METHOD TO REFUEL A CRAWLER VEHICLE WITH HYDROGEN**

(30) Priority: 29.11.2023 IT 202300025428
(71) Applicant: PRINOTH S.p.A., 39049 Vipiteno (BZ) (IT)
(72) Inventor: KIRCHMAIR, Martin, 39049 Vipiteno (BZ) (IT); THOM, Jamie, 39049 Vipiteno (BZ) (IT); PEGORARO, Roberto, 39049 Vipiteno (BZ) (IT); PAOLETTI, Alberto, 39049 Vipiteno (BZ) (IT)
(74) Representative: Studio Torta S.p.A.

(57) **Abstract**

A refuelling station to refuel a crawler vehicle with hydrogen at a work site is configured to be transported to the work site and has a compressor unit (18) configured to receive, as an input, hydrogen from a hydrogen source (14) and/or from a hydrogen distribution network (17) and to compress the received hydrogen; and an injection nozzle (19), which is connected to the compressor unit (18) and is configured to be coupled to a hydrogen accumulator (8) of the crawler vehicle (2) so as to dispense the compressed hydrogen into said hydrogen accumulator (8).

## Description

### CROSS-REFERENCE TO RELATED APPLICATIONS

This patent application claims priority from Italian patent application no. 102023000025428 filed on November 29, 2023, the entire disclosure of which is incorporated herein by reference.

### TECHNICAL FIELD

The invention relates to a refuelling station and method to refuel a crawler vehicle with hydrogen at a work site.

### STATE OF THE ART

In the last decades, the increasing attention towards global pollution reduction has led to the development of crawler vehicles equipped with alternative powering systems supplied with renewable energy sources, such as, for example, hydrogen fuel cells.

As it is known, a hydrogen-powered crawler vehicle comprises a hydrogen accumulator provided with a plurality of hydrogen-containing power tanks, a fuel cell configured to generate electrical energy from hydrogen and an electric motor powered by the electrical energy generated by the fuel cell.

When the hydrogen contained in the supply tanks is almost exhausted, it is necessary to refuel the crawler vehicle.

Generally, refuelling is carried out by connecting the crawler vehicle to a refuelling system, which is installed at the work site and includes a high-pressure storage tank, typically between 900 bar and 1000 bar, so as to allow the gas in the storage tank to flow into the supply tanks of the crawler vehicle, which have an inner pressure of less than 700 bar.

However, since the storage tank contains high-pressure hydrogen, the refuelling procedure involves risks and currently known refuelling systems are expensive and large. As a result, the number of said refuelling systems in the entire work site is limited and sometimes it is not sufficient to cover the entire work site of the crawler vehicle.

### SUBJECT-MATTER OF THE PATENT

The object of the invention is to provide a refuelling station to refuel a crawler vehicle with hydrogen, which reduces the drawbacks of the prior art discussed above.

According to the invention, there is provided a refuelling station to refuel a crawler vehicle with hydrogen at a work site, the refuelling station being configured to be transported to the work site and comprising:
- a compressor unit configured to receive hydrogen, as an input, from a hydrogen source and/or from a hydrogen distribution network and to compress the received hydrogen; and
- an injection nozzle, which is connected to the compressor unit and is configured to be coupled to a hydrogen accumulator of the crawler vehicle so as to deliver the compressed hydrogen into said hydrogen accumulator.

Thanks to the invention, it is possible to refuel the crawler vehicle with hydrogen directly at the work site, without the need to install an expensive and large refuelling system for an intermediate storage of high-pressure hydrogen. In practice, the absence of an intermediate storage tank makes it possible to increase the safety of the refuelling procedure of the crawler vehicle.

In addition, it is possible to create a light and small refuelling station, which allows the refuelling station to be transported on-road and off-road. In this way, a plurality of refuelling stations can be placed in given areas of the work site to cover the entire work site of the crawler vehicle. Depending on the particular needs, it is possible to easily move the refuelling stations within the work site to adjust, for example, the distance between the refuelling stations.

In particular, the refuelling station comprises an outer casing arranged around the compressor unit so as to protect and isolate the compressor unit from the external environment.

In particular, the outer casing extends along a first direction for a first length comprised between 1.5 meters and 2.5 meters, along a second direction substantially perpendicular to the first direction for a second length comprised between 3 meters and 4 meters, and along a third direction substantially perpendicular to the first direction and to the second direction for a third length comprised between 1.5 meters and 2.5 meters.

In this way, the refuelling station is reduced in size and, as a consequence, can be easily transported within the work site and/or from one work site to another.

In particular, the refuelling station comprises a manifold configured to fluidically connect the compressor unit to the injection nozzle. More in detail, the manifold comprises a flexible connection pipe.

In this way, it is possible to supply hydrogen under pressure from the compressor unit to the injection nozzle.

In particular, the refuelling station comprises an electrical connector configured to be coupled to a power supply module.

In this way, it is possible to supply electrical power to the refuelling station to supply, in particular, the compressor unit.

A further object of the invention is to provide a refuelling method to refuel a crawler vehicle with hydrogen, which reduces the drawbacks of the prior art discussed above.

According to the invention, there is provided a refuelling method to refuel a crawler vehicle with hydrogen at a work site, the refuelling method comprising the steps of:
- transporting a hydrogen refuelling station comprising a compressor unit and an injection nozzle to the work site;
- injecting hydrogen into the compressor unit from a hydrogen source and/or from a hydrogen distribution network;
- compressing the received hydrogen by means of the compressor unit;
- coupling the injection nozzle to a hydrogen accumulator of the crawler vehicle; and
- delivering the compressed hydrogen into said hydrogen accumulator by means of the injection nozzle.

Thanks to this method, it is possible to refuel the crawler vehicle with hydrogen in a safe and simple manner, without the need to install an expensive and large refuelling system for an intermediate storage of high-pressure hydrogen.

According to a further embodiment of the invention, the refuelling method comprises the steps of:
- placing a first hydrogen-powered crawler vehicle in proximity to a second hydrogen-powered crawler vehicle;
- connecting a first hydrogen accumulator of the first crawler vehicle to a second hydrogen accumulator of the second crawler vehicle by means of a connection pipe; and
- feeding a flow of hydrogen from the first hydrogen accumulator to the second hydrogen accumulator through said connection pipe.

In this way, it is possible to refuel a crawler vehicle with hydrogen even when said crawler vehicle is located at a distance from one of the refuelling stations.

### BRIEF DESCRIPTION OF THE DRAWINGS

Further features and advantages of the invention will be best understood upon perusal of the following description of a non-limiting embodiment thereof, with reference to the accompanying Figures, wherein:
- Figure 1 is a plan view, with parts removed for greater clarity and schematic parts, of a crawler vehicle and of a refuelling system according to the invention;
- Figure 2 is a perspective view, with parts removed for greater clarity, of a refuelling station of the refuelling system of Figure 1;

- Figure 3 is a side view, with parts removed for greater clarity, of a transport vehicle and of a hydrogen source of the refuelling system of Figure 1 carried by the transport vehicle; and
- Figure 4 is a plan view, with parts removed for greater clarity and schematic parts, of a first and a second crawler vehicle during a step of a refuelling method carried out according to the invention.

### DETAILED DESCRIPTION

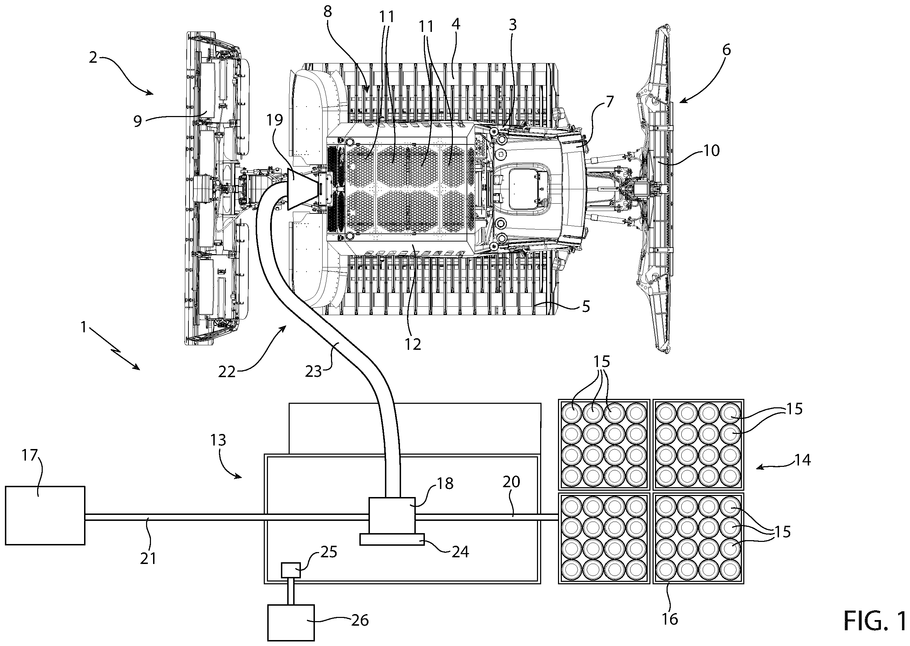

With reference to Figure 1, number 1 indicates, as a whole, a refuelling system to refuel a crawler vehicle 2 with hydrogen at a work site.

In the case described and shown herein, which does not limit the invention, the crawler vehicle 2 is used for the preparation of ski runs. In particular, the crawler vehicle 2 is a snow groomer.

More in detail, the crawler vehicle 2 is used for the preparation of ski runs for Alpine skiing and/or ski runs for cross-country skiing and/or ramps for ski jumping and/or half-pipes and/or snow-parks.

It should be pointed out that, according to a further embodiment, the crawler vehicle 2 can be used in agricultural operations, such as for example the harvesting and/or the handling of agricultural products and/or the ensilage of fodder and/or the harvesting and/or the handling of bagasse. According to this configuration, the crawler vehicle 2 can comprise a mulcher preferably located on the front side of the crawler vehicle 2 and can be used to mulch plants.

According to a further embodiment, the crawler vehicle 2 can be used to clean beaches and/or to process sandy areas.

The crawler vehicle 2 is powered by hydrogen and comprises a frame 3; a track 4; a track 5; a set of tools 6 connected to the frame 3; a cabin 7 mounted on the frame 3; and a hydrogen accumulator 8.

In the non-limiting embodiment of the invention described and shown herein, the set of tools 6 comprises a tiller 9, which is connected to the frame 3 in a movable manner, and a shovel 10, , which is connected to the frame 3 in a movable manner.

The hydrogen accumulator 8 comprises a plurality of supply tanks 11 configured to contain hydrogen and a housing structure 12 configured to house the supply tanks 11. In particular, the hydrogen accumulator 8 is located behind the cabin 7 relative to a travel direction of the crawler vehicle 2.

According to an embodiment, the crawler vehicle 2 further comprises a fuel cell, not shown in the accompanying Figures, which is configured to receive hydrogen from the hydrogen accumulator 8 and to generate electrical energy from the received hydrogen; and an electric drive system, not shown in the accompanying Figures, which is powered by the electrical energy generated by the fuel cell and is configured to transmit power to the tracks 4, 5 and the set of tools 6.

According to an alternative embodiment which is not shown in the accompanying Figures, the crawler vehicle 2 comprises a hydrogen-powered internal combustion engine. In particular, said internal combustion engine is configured to receive hydrogen from the hydrogen accumulator 8 and to transmit power to the tracks 4, 5 and to the set of tools 6.

The refuelling system 1 comprises a refuelling station 13 to refuel the crawler vehicle 2 with hydrogen at the work site.

In particular, the work site can be a ski area or a ski run or an agricultural land or a beach or a stretch of sand, without for this reason limiting the wide range of possible applications of the invention.

In addition, the refuelling system 1 comprises a hydrogen source 14, which is connected to the refuelling station 13 so as to feed hydrogen to the refuelling station 13 and comprises at least one hydrogen tank 15. The hydrogen source 14 comprises a containment frame 16 configured to contain a plurality of hydrogen tanks 15, such as, for example, hydrogen cylinders.

In addition or alternatively, the refuelling system 1 comprises a hydrogen distribution network 17 connected to the refuelling station 13 so as to feed hydrogen to the refuelling station 13.

The refuelling station 13 is configured to be transported to the work site and comprises a compressor unit 18 configured to receive, as an input, hydrogen from the hydrogen source 14 and/or from the hydrogen distribution network 17 and to compress the received hydrogen; and an injection nozzle 19, which is connected to the compressor unit 18 and is configured to be coupled to the hydrogen accumulator 8 of the crawler vehicle 2 so as to dispense the compressed hydrogen into the hydrogen accumulator 8.

More in detail, the refuelling station 13 is configured to be coupled to a front portion of the frame 3 of the crawler vehicle 2 and/or to the shovel 10 and preferably comprises hooking devices, not shown in the accompanying Figures, configured to allow the refuelling station 13 to be lifted by a crane.

In particular, the refuelling system 1 comprises a connection pipe 20 to fluidically connect the hydrogen source 14 to the compressor unit 18.

Alternatively or in addition, the refuelling system 1 comprises a connection pipe 21 to fluidically connect the hydrogen distribution network 17 to the compressor unit 18.

In the specific case described and shown herein, the refuelling station 13 comprises a manifold 22 configured to fluidically connect the compressor unit 18 to the injection nozzle 19. In particular, the manifold 22 comprises a flexible connection pipe 23.

Furthermore, the refuelling station 13 comprises a heating unit 24 configured to heat the compressor unit 18. In particular, the heating unit 24 comprises a heat exchanger and/or an electrical resistance.

According to an embodiment, the refuelling station 13 comprises an electrical connector 25 configured to be coupled to an external power supply module 26. In particular, the electrical connector 25 electrically connects the power supply module 26 to the compressor unit 18, so as to electrically power the compressor unit 18.

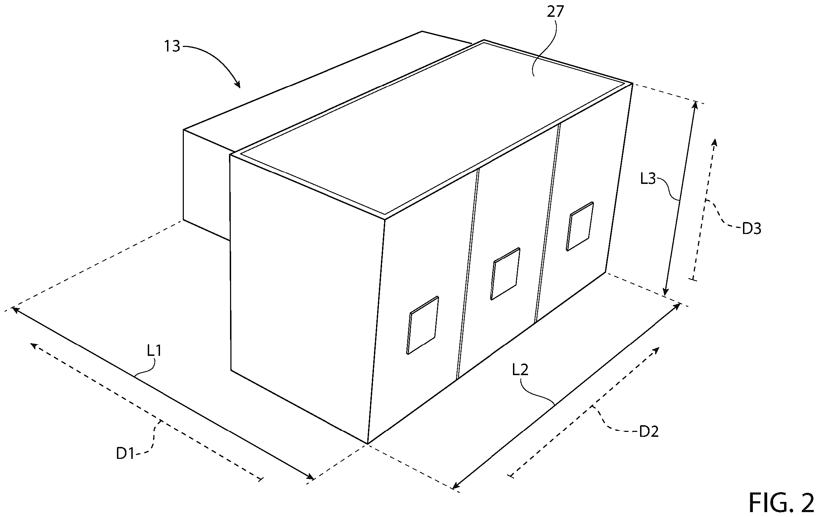

With reference to Figure 2, the refuelling station 13 comprises an outer casing 27 arranged around the compressor unit 18. In other words, the compressor assembly 18 is enclosed within the outer casing 27.

In the specific case described and shown herein, the outer casing 27 has the shape of a parallelepiped.

The outer casing 27 extends along a direction D1 for a first length L1 comprised between 1.5 meters and 2.5 meters, along a direction D2 substantially perpendicular to the direction D1 for a second length L2 comprised between 3 meters and 4 meters, and along a direction D3 substantially perpendicular to the directions D1 and D2 for a third length L3 comprised between 1.5 meters and 2.5 meters.

In other words, the directions D1, D2 and D3 are substantially perpendicular to one another.

In particular, the outer casing 27 is made of a thermally insulating material.

In use and with reference to Figure 1, the refuelling station 13 is transported to the work site and is placed in a certain refuelling zone of the work site.

More in detail, the transport of the refuelling station 13 is carried out by means of a transport vehicle, such as, for example, a crawler vehicle or a truck. According to an embodiment, a crane loads and unloads the refuelling station 13 onto/from the transport vehicle.

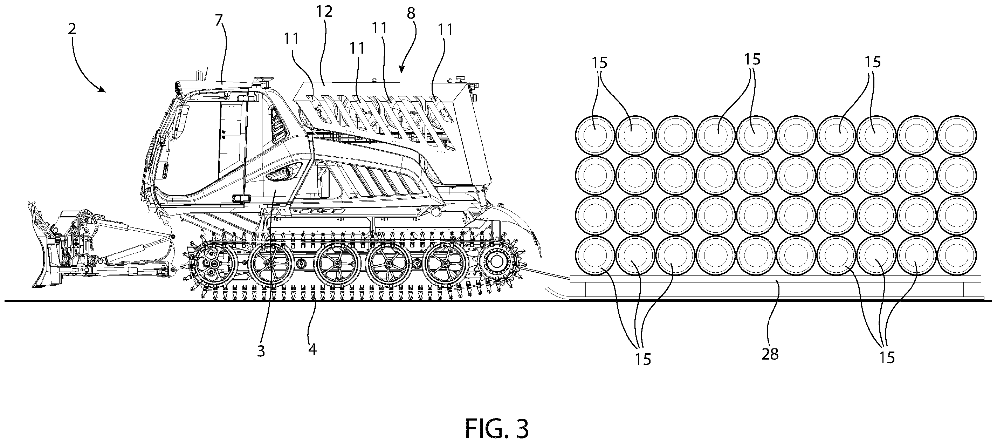

With reference to Figure 3, the hydrogen tanks 15 of the hydrogen source 14 are transported to the refuelling station 13 by means of a transport vehicle, such as, for example, the crawler vehicle 2.

In the specific case described and shown herein, which does not limit the invention, the hydrogen tanks 15 are loaded onto a slide 28 towed by the crawler vehicle 2, which transports the hydrogen tanks 15 to the refuelling zone where the refuelling station 13 is located.

With reference to Figure 1, the crawler vehicle 2 to be refuelled is placed in the vicinity of the refuelling station 13 and the injection nozzle 19 is coupled to the hydrogen accumulator 8 of the crawler vehicle 2.

The first part of the refuelling takes place by exploiting the pressure difference between the hydrogen contained in the hydrogen tanks 15 of the hydrogen source 14 and the hydrogen contained in the hydrogen accumulator 8. At this stage, a hydrogen flow is naturally fed from the hydrogen source 14 to the hydrogen accumulator 8 through the manifold 22 and the injection nozzle 19.

When the pressure difference between the hydrogen contained in the hydrogen tanks 15 of the hydrogen source 14 and the hydrogen contained in the hydrogen accumulator 8 decreases and is no longer sufficient to feed a flow of hydrogen from the hydrogen source 14 to the hydrogen accumulator 8, the compressor unit 18 of the refuelling station 13 is connected to the hydrogen source 14 through the connection pipe 20 and/or to the hydrogen distribution network 17 through the connection pipe 21.

Subsequently, hydrogen is fed by the hydrogen source 14 and/or by the hydrogen distribution network 17 to the compressor unit 18. The compressor unit 18 compresses the incoming hydrogen and conveys the compressed hydrogen to the injection nozzle 19, which delivers the compressed hydrogen to the hydrogen accumulator 8.

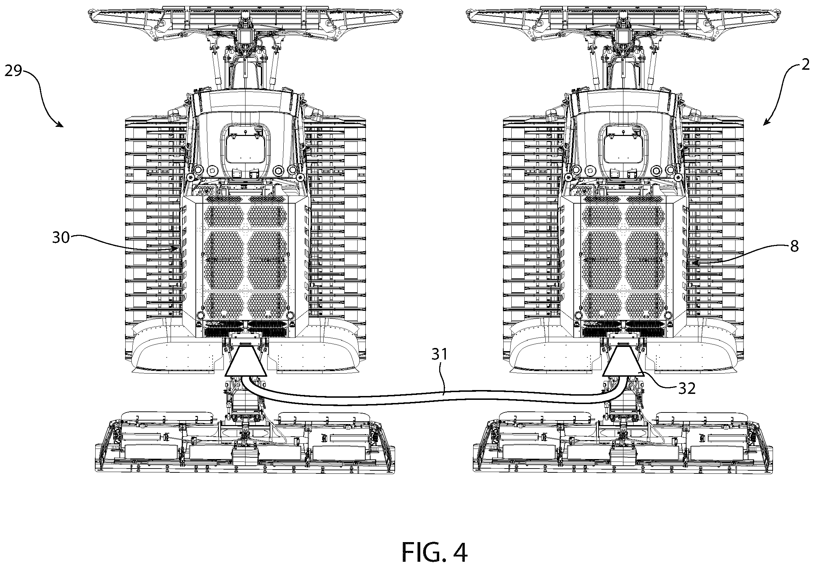

With reference to Figure 4, when the hydrogen accumulator 8 of the crawler vehicle 2 is almost out of hydrogen and the crawler vehicle 2 is far from one of the refuelling stations 13, a further crawler vehicle 29 comprising a hydrogen accumulator 30 reaches the crawler vehicle 2 and stops beside the crawler vehicle 2. In particular, the hydrogen accumulator 30 contains a first quantity of hydrogen that is greater than a second quantity of hydrogen contained in the hydrogen accumulator 8.

At this point, the hydrogen accumulator 30 of the crawler vehicle 29 is connected to the hydrogen accumulator 8 of the crawler vehicle 2 through a connection pipe 31 provided with a nozzle 32 at one end and a flow of hydrogen is fed from the hydrogen accumulator 30 to the hydrogen accumulator 8 through the connection pipe 31 so as to supply the crawler vehicle 2 with hydrogen.

In particular, the hydrogen feeding flow through the connection pipe 31 is regulated by a valve assembly, which is not shown in the accompanying Figures, as a function of the pressure and/or temperature of the hydrogen contained in the hydrogen accumulators 8 and 30.

The invention can evidently be subjected to variants, though without going beyond the scope of protection set forth in the appended claims.

## Claims

1. A refueling station to refuel a crawler vehicle with hydrogen at a work site, the refueling station (13) being configured to be transported to the work site and comprising:
- a compressor unit (18) configured to receive hydrogen in input from a hydrogen source (14) and/or from a hydrogen distribution network (17) and to compress the hydrogen received; and
- an injection nozzle (19), which is connected to the compressor unit (18) and is configured to be coupled to a hydrogen accumulator (8) of the crawler vehicle (2) so as to deliver the compressed hydrogen into said hydrogen accumulator (8).

2. The refueling station as claimed in claim 1, and comprising an outer casing (27) arranged around the compressor unit (18).

3. The refueling station as claimed in claim 2, wherein the outer casing (27) extends along a first direction (D1) for a first length (L1) comprised between 1,5 meters and 2,5 meters, along a second direction (D2) substantially perpendicular to the first direction (D1) for a second length (L2) comprised between 3 meters and 4 meters, and along a third direction (D3) substantially perpendicular to the first direction (D1) and to the second direction (D2) for a third length (L3) comprised between 1,5 meters and 2,5 meters.

4. The refueling station as claimed in any one of the foregoing claims, and comprising a manifold (22) configured to fluidically connect the compressor unit (18) to the injection nozzle (19).

5. The refueling station as claimed in claim 4, wherein the manifold (22) comprises a flexible connection pipe (23).

6. The refueling station as claimed in any one of the foregoing claims, and comprising a heating unit (24) configured to heat the compressor unit (18).

7. The refueling station as claimed in any one of the foregoing claims, and comprising an electrical connector (25) configured to be coupled to a power supply module (26).

8. A refueling system to refuel a crawler vehicle with hydrogen at a work site, the refueling system (1) comprising:
- the refueling station (13) as claimed in any of the foregoing claims; and
- a hydrogen source (14), which is connected to the compressor unit (18) of the refueling station (13) and comprises at least one hydrogen tank (15).

9. The refueling system as claimed in claim 8, wherein the hydrogen source (14) comprises a containment frame (16) configured to contain a plurality of hydrogen tanks (15).

10. A refueling method to refuel a crawler vehicle with hydrogen at a work site, the refueling method comprising the steps of:
- transporting a hydrogen refueling station (13) comprising a compressor unit (18) and an injection nozzle (19) to the work site;
- injecting hydrogen into the compressor unit (18) from a hydrogen source (14) and/or from a hydrogen distribution network (17);
- compressing the received hydrogen by means of the compressor unit (18);
- coupling the injection nozzle (19) to a hydrogen accumulator (8) of the crawler vehicle (2); and
- delivering the compressed hydrogen into said hydrogen accumulator (8) by means of the injection nozzle (19) .

11. The refueling method as claimed in claim 10, and comprising the step of moving the refueling station (13) from a first work site to a second work site by means of a transport vehicle and/or a crane.

12. The refueling method as claimed in claim 10 or 11, and comprising the step of connecting the compressor unit (18) to a hydrogen source (14) and/or to a hydrogen distribution network (17).

13. The refueling method as claimed in any one of claims 10 to 12, and comprising the steps of coupling a hydrogen source (14) comprising a plurality of hydrogen tanks (15) to a transport vehicle; and transporting the hydrogen source (14) at the refueling station (13) by means of said transport vehicle.

14. A refueling method to refuel a crawler vehicle with hydrogen at a work site, the refueling method comprising the steps of:
- placing a first hydrogen-fueled crawler vehicle (29) in proximity to a second hydrogen-fueled crawler vehicle (2) ;
- connecting a first hydrogen accumulator (30) of the first crawler vehicle (29) to a second hydrogen accumulator (8) of the second crawler vehicle (2) by means of a connection pipe (31); and
- feeding a flow of hydrogen from the first hydrogen accumulator (30) to the second hydrogen accumulator (8) through said connection pipe (31).

15. The refueling method as claimed in claim 14, wherein the first hydrogen accumulator (30) contains a first amount of hydrogen and the second hydrogen accumulator (8) contains a second amount of hydrogen less than the first amount of hydrogen.

16. The refueling method as claimed in claim 14 or 15, and comprising the step of controlling the hydrogen feeding flow through the connection pipe (31) according to the pressure and/or to the temperature of the hydrogen contained in the first and/or in the second hydrogen accumulator (8).
